# EUROPÄISCHE PATENTSCHRIFT

(11) **EP 2 121 709 B1**
(45) Veröffentlichungstag und Bekanntmachung des Hinweises auf die Patenterteilung: **14.07.2010**
(21) Anmeldenummer: 08709202.9
(22) Anmeldetag: 25.02.2008
(51) Int. Cl.: C07F 7/14, C07F 7/08, C07F 7/18

(54) **IRIDIUMKATALYSIERTES HERSTELLUNGSVERFAHREN FÜR SILICIUMORGANISCHE VERBINDUNGEN**
IRIDIUM-CATALYZED PRODUCTION METHOD FOR ORGANOSILICON COMPOUNDS
PROCÉDÉ DE FABRICATION DE COMPOSÉS ORGANIQUES DE SILICIUM CATALYSÉ PAR DE L'IRIDIUM

(30) Priorität: 07.03.2007 DE 102007011158
(43) Veröffentlichungstag der Anmeldung: 25.11.2009
(73) Patentinhaber: Wacker Chemie AG, 81737 München (DE)
(72) Erfinder: BAUER, Andreas, 84375 Kirchdorf (DE); SCHÄFER, Oliver, 84489 Burghausen (DE)
(74) Vertreter: Fritz, Helmut
(86) Internationale Anmeldenummer: PCT/EP2008/052237
(87) Internationale Veröffentlichungsnummer: WO 2008/107332

(56) Entgegenhaltungen:
- EP-A- 1 156 052

## Beschreibung

Die Erfindung betrifft ein Verfahren zur Herstellung von substituierten Alkylsilanen durch Anlagerung von Silanen mit einer Si-H-Bindung an ungesättigte Aliphaten in Gegenwart eines speziellen Ir Katalysator/Cokatalysator-Systems.

Substituierte Alkylsilane sind von enormem wirtschaftlichem Interesse für eine Vielzahl von Bereichen. Sie werden eingesetzt z.B. als Haftvermittler oder als Vernetzer.

Die Platin- bzw. Rhodium-katalysierte Hydrosilylierung von ungesättigten Verbindungen ist bereits vielfach untersucht worden. Die Verwendung von Platin-enthaltenden Hydrosilylierungs-Katalysatoren wird beispielsweise in US 2823218 A und 3159601 beschrieben. US 3296291 A und US 3564266 A erwähnen den Einsatz von Rhodium-Katalysatoren. Die Produktausbeuten sind oft mit 20 bis 45% sehr niedrig, was auf erhebliche Nebenreaktionen zurückzuführen ist.

Iridium-Katalysatoren werden gemäß US 4658050 A, JP 6100572 A und EP 0709392 A in der Hydrosilylierung von Allylverbindungen mit Alkoxy-substituierten Silanen verwendet. Das japanische Patent JP 07126271 A beschäftigt sich mit der Hydrosilylierung von Allylhalogeniden mit Chlorodimethylsilan. Nachteile dieser Verfahren sind entweder mäßige Ausbeuten, eine unwirtschaftlich hohe Katalysator-Konzentration und/oder eine sehr kurze Lebensdauer des Katalysators. DE 10053037 C sowie EP 1156052 A beschreiben Verfahren, in denen niedermolekulare, bevorzugt cyclische Diene als Cokatalysatoren zugesetzt werden, um die Mengen an benötigtem Katalysator zu verringern. Diese Cokatalysatoren haben jedoch den Nachteil, dass sie auch mit den entsprechenden Silanen reagieren und diese Reaktionsprodukte nur schwer von den gewünschten Zielprodukten destillativ abgetrennt werden können.

Nachteilig an diesen Systemen ist weiterhin, dass nach Abschluss der Reaktion der Reaktionssumpf mit Edelmetallrückständen kontaminiert ist, eine weitere Abtrennung/Konzentration der Rückstände durch Extraktion oder Ausfällung kommerziell nicht durchführbar ist, so dass der Reaktionssumpf komplett aufgeschlossen werden muss.

Die Aufgabe war es nun, ein Katalysator-System mit langer Lebensdauer zu entwickeln, welches hohe Produktausbeuten und - reinheit bei sehr geringen Katalysatormengen gewährleistet und zudem sowohl eine kontinuierliche als auch diskontinuierliche Reaktionsführung erlaubt. Der Reaktionssumpf sollte zudem ohne weitere Aufarbeitung wieder einsetzbar sein.

Gegenstand der Erfindung ist ein Verfahren zur Herstellung von Silanen der allgemeinen Formel I 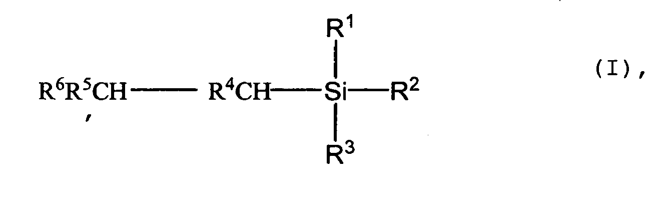 bei dem Verbindungen der allgemeinen Formel II 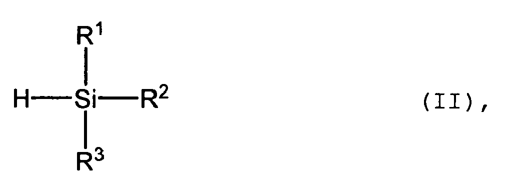 mit Alkenen der allgemeinen Formel III

R⁵R⁶C=CHR⁴ (III),

umgesetzt werden in Gegenwart einer Iridium-Verbindung der allgemeinen Formel IV

[(en)IrCl]₂ (IV),

als Katalysator, in der "en" eine offenkettige, cyclische oder bicyclische Verbindung mit mindestens einer Doppelbindung der allgemeinen Formel V 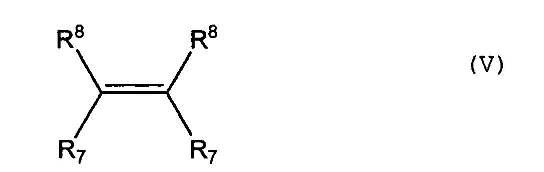 bedeutet, und in Gegenwart von polymeren-Cokatalysatoren, die Struktureinheiten der allgemeinen Formeln VI-VIII cis-Doppelbindungen 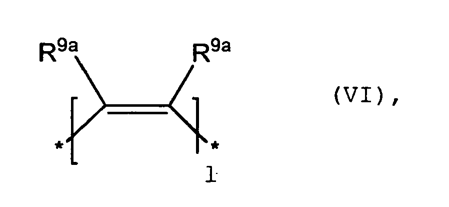 trans-Doppelbindungen 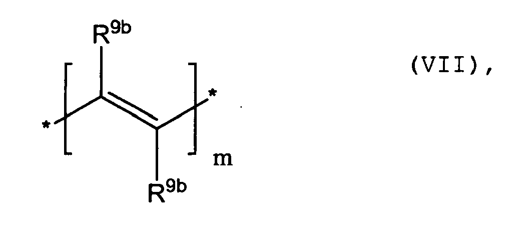 laterale Doppelbindungen 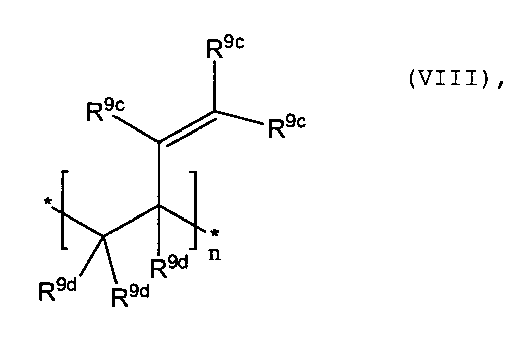 enthalten, wobei
- **R¹, R², R³**: gegebenenfalls mit F, Cl oder Br substituierten Kohlenwasserstoff- oder Alkoxyrest mit jeweils 1 bis 18 C-Atomen, wobei die Kohlenstoffkette durch nicht benachbarte -O- Gruppen unterbrochen sein kann, oder Cl
- **R⁴, R⁵, R⁶**: Wasserstoff oder gegebenenfalls mit F, Cl, OR, NR'₂, CN oder NCO substituierten Kohlenwasserstoffrest mit jeweils 1 bis 18 C-Atomen, wobei die Kohlenstoffkette durch nicht benachbarte -O- Gruppen unterbrochen sein kann, wobei 2 oder 3 Reste ausgewählt aus **R⁴, R⁵, R⁶** gemeinsam eine cyclische Verbindung sein können,
- **R⁷**: Wasserstoff oder gegebenenfalls mit F, Cl, OR, NR'₂, CN oder NCO substituierten Kohlenwasserstoffrest mit jeweils 1 bis 18 C-Atomen, wobei die Kohlenstoffkette durch nicht benachbarte -O- Gruppen unterbrochen sein kann, wobei 2 Reste **R⁷** gemeinsam eine cyclische Verbindung sein können,
- **R⁸**: Wasserstoff oder gegebenenfalls mit F, Cl, OR, NR'₂, CN oder NCO substituierten Kohlenwasserstoffrest mit jeweils 1 bis 1000 C-Atomen, wobei die Kohlenstoffkette durch nicht benachbarte -O- Gruppen unterbrochen sein kann,
- **R^{9a}, R^{9b}, R^{9c}, R^{9d}**: Wasserstoff oder gegebenenfalls mit F, Cl, OR, NR'₂, CN oder NCO substituierten Kohlenwasserstoffrest mit jeweils 1 bis 18 C-Atomen, wobei die Kohlenstoffkette durch nicht benachbarte -O- Gruppen unterbrochen sein kann, wobei 2 oder 3 Reste ausgewählt aus **R^{9a}, R^{9b}, R^{9c}, R^{9d}** gemeinsam eine cyclische Verbindung sein können,
- **R'**: Wasserstoff oder gegebenenfalls mit Fl, Cl oder Br substituierten Kohlenwasserstoffrest mit jeweils 1 bis 18 C-Atomen, wobei die Kohlenstoffkette durch nicht benachbarte -O- Gruppen unterbrochen sein kann,
- **l, m**: ganzzahlige Werte von 3 bis 5000 und
- **n**: ganzzahlige Werte von 5 bis 5000 bedeuten.

Das Katalysatorsystem aus Iridium-Verbindung der allgemeinen Formel IV und polymeren Cokatalysatoren, die Struktureinheiten der allgemeinen Formeln VI-VIII aufweisen, weist eine lange Lebensdauer auf, gewährleistet hohe Produktausbeuten und - reinheit bei sehr geringen Katalysatormengen und erlaubt eine kontinuierliche als auch diskontinuierliche Reaktionsführung. Die Entfernung der Edelmetallrückstände aus dem Reaktionssumpf ist einfach möglich.

Die Silane der allgemeinen Formel I entstehen üblicherweise in Ausbeuten von mindestens 95 %. Die so nach dem erfindungsgemässen Verfahren hergestellten Rohprodukte der allgemeinen Formel I fallen in einer Reinheit von bis zu 98 % an, so dass je nach Anwendungsgebiet selbst auf eine destillative Aufarbeitung verzichtet werden kann. Nach destillativer Abtrennung der Produkte der allgemeinen Formel I kann der Destillationssumpf ohne weitere Aufarbeitung wieder für eine Umsetzung eingesetzt werden.

Vorzugsweise bedeuten die Kohlenwasserstoffreste **R¹, R², R³** Alkyl-, Alkenyl-, Cycloalkyl-, Arylreste oder Cl. Vorzugsweise weisen die Kohlenwasserstoffreste **R¹, R², R³** keine Substituenten auf. Vorzugsweise besitzen die Kohlenwasserstoffreste **R¹, R², R³** 1 bis 6 Kohlenstoffatome. Besonders bevorzugte Reste sind Methyl, Ethyl, Propyl und Phenyl. Bevorzugte Alkoxyreste besitzen 1 bis 6 Kohlenstoffatome Besonders bevorzugte Reste sind Methyl, Ethyl, Propyl und Cl.

Vorzugsweise bedeuten die Kohlenwasserstoffreste **R⁴, R⁵, R⁶** Alkyl-, Alkenyl- Cycloalkyl- oder Arylreste. Vorzugsweise sind die Substituenten an den Kohlenwasserstoffresten **R⁴, R⁵, R⁶** Chlor oder Brom. Vorzugsweise besitzen die Kohlenwasserstoffreste **R⁴, R⁵, R⁶** 1 bis 10 Kohlenstoffatome. Besonders bevorzugte Reste sind Methyl, Chlorethyl, Propyl und Phenyl. Vorzugsweise weist die aus **R⁴, R⁵, R⁶** gebildete cyclische Verbindung 5 bis 15 Kohlenstoffatome auf.

Vorzugsweise bedeuten die Kohlenwasserstoffreste **R⁷** Alkyl-, Alkenyl- Cycloalkyl- oder Arylreste. Vorzugsweise weisen die Kohlenwasserstoffreste **R⁷** keine Substituenten auf. Vorzugsweise besitzen die Kohlenwasserstoffreste **R⁷** 1 bis 10 Kohlenstoffatome. Besonders bevorzugte Reste sind Methyl, Ethyl, Propyl und Phenyl. Vorzugsweise weist die aus 2 Resten **R⁷** gebildete cyclische Verbindung 5 bis 15 Kohlenstoffatome auf.

Vorzugsweise bedeuten die Kohlenwasserstoffreste **R⁸** Alkyl-, Alkenyl- Cycloalkyl- oder Arylreste. Vorzugsweise weisen die Kohlenwasserstoffreste **R⁸** keine Substituenten auf. Vorzugsweise besitzen die Kohlenwasserstoffreste **R⁸** mindestens 2, insbesondere mindestens 5 Kohlenstoffatome und vorzugsweise höchstens 200, insbesondere höchstens 100 Kohlenstoffatome.

Vorzugsweise bedeuten die Kohlenwasserstoffreste R**^{9a}, R^{9b}, R^{9c}, R^{9d}** Alkyl-, Alkenyl- Cycloalkyl- oder Arylreste. Vorzugsweise weisen die Kohlenwasserstoffreste **R^{9a}, R^{9b}, R^{9c}, R^{9d}** keine Substituenten auf. Vorzugsweise besitzen die Kohlenwasserstoffreste **R^{9a}, R^{9b}, R^{9c}, R^{9d}** 1 bis 10 Kohlenstoffatome. Besonders bevorzugte Reste sind Methyl, Ethyl, Propyl und Phenyl. Vorzugsweise weist die aus **R^{9a}, R^{9b}, R^{9c}, R^{9d}** gebildete cyclische Verbindung 5 bis 15 Kohlenstoffatome auf.

Vorzugsweise bedeuten die Kohlenwasserstoffreste **R'** Alkyl-, Alkenyl- Cycloalkyl- oder Arylreste. Vorzugsweise weisen die Kohlenwasserstoffreste **R'** keine Substituenten auf. Vorzugsweise besitzen die Kohlenwasserstoffreste **R'** 1 bis 6 Kohlenstoffatome. Besonders bevorzugte Reste sind Methyl, Ethyl, Propyl und Phenyl.

Vorzugsweise bedeuten **l**, **m** ganzzahlige Werte von mindestens 6, insbesondere mindestens 20 und höchstens 2000, insbesondere höchstens 200.

Vorzugsweise bedeutet n ganzzahlige Werte von mindestens 10, insbesondere mindestens 50 und höchstens 1000, insbesondere höchstens 200.

Vorzugsweise wird die Verbindung der allgemeinen Formel II im Überschuß von 0,01 bis 100 Mol-% II, besonders bevorzugt 0,1 bis 10 Mol-% mit einem Alken der allgemeinen Formel III umgesetzt. Die Iridium-Verbindung der allgemeinen Formel IV wird vorzugsweise in einer Konzentration von 5 bis 250 ppm, insbesondere 10 bis 50 ppm eingesetzt. Der polymere Cokatalysator wird vorzugsweise in einer Konzentration von 50 bis 50000 ppm, insbesondere 50 bis 20000 ppm eingesetzt.

Vorzugsweise enthält die "en"-Verbindung in der allgemeinen Formel IV zwei Doppelbindungen, die ganz besonders bevorzugt nicht konjugiert sind. Besonders bevorzugt wird eine cyclische "en"-Verbindung verwendet. In einem ganz besonders bevorzugten Fall wird als Katalysator [(Cycloocta-1c,5c-dien)IrCl]₂ verwendet.

Der polymere Cokatalysator kann konjugiert oder nicht konjugiert sein. Besonders bevorzugt als polymerer Cokatalysator sind Polybutadiene mit einem Molekulargewicht von 200 bis 200 000 g/mol, besonders bevorzugt mit einem Molekulargewicht von 500 bis 20 000 g/mol und ganz besonders bevorzugt mit einem Molekulargewicht von 1000 bis 10 000 g/mol. Besonders bevorzugt sind ebenfalls polymere Cokatalysatoren, bei denen der Anteil an Struktureinheiten der allgemeinen Formel VI (cis-Doppelbindung) mindestens 10 Gew. % beträgt, ganz besonders bevorzugt mindestens 20 Gew. % beträgt. Beispiele für solche Verbindungen sind die Lithene® Produkte der Fa. Synthomer, z.B. Lithene® N4-5000.

Beispielsweise werden die Reaktionskomponenten der allgemeinen Formel II zusammen mit Iridium-Katalysator der allgemeinen Formel IV und gegebenenfalls der polymere Cokatalysator vorgelegt und die Reaktionskomponente der allgemeinen Formel III, gegebenenfalls im Gemisch mit dem polymeren Cokatalysator, unter Rühren zudosiert. Die Umsetzung kann gegebenenfalls in Lösung im Zielprodukt der allgemeinen Formel I geschehen. In einer anderen Variante wird das Zielprodukt der allgemeinen Formel I zusammen mit Katalysator und gegebenenfalls polymeren Cokatalysator vorgelegt und eine Mischung aus Komponente II, III und gegebenenfalls dem polymeren Cokatalysator zudosiert.

Die anzuwendende Reaktionszeit liegt vorzugsweise bei 0,1 bis 2000 Minuten. Die Reaktion wird vorzugsweise bei einer Temperatur von 0 bis 300°C, insbesondere 20°C bis 200°C, ausgeführt. Gegebenfalls ist auch die Anwendung von erhöhtem Druck dienlich, vorzugsweise bis 100 bar.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20 °C.

### Beispiel 1 (nicht erfindungsgemäß)

In einem 100ml-Dreihalskolben versehen mit Intensivkühler, Innenthermometer und Tropftrichter wurden 19,2 g (0,25 mol) Allylchlorid, 0,1 g (9,2·10⁻⁴ mol) 1,5-Cyclooctadien und 3,0 mg (4,5·10⁻⁶ mol, 18 ppm) Di-µ-chloro-bis-[(cycloocta-1c,5c-dien)-iridium(I)] vorgelegt. Bei einer Badtemperatur von 37°C wurde eine Mischung aus 23,7 g (0,25 mol) Chlorodimethylsilan und 0,1 g (9,2·10⁻⁴ mol) 1,5-Cyclooctadien über einen Zeitraum von 1,5 h so zudosiert, dass die Innentemperatur 45°C nicht überstieg. Für die Nachreaktion wurde der Ansatz eine weitere Stunde bei einer Badtemperatur von 45°C gehalten. Nach destillativer Aufarbeitung wurden 40,8 g Chloro-(3-chlorpropyl)-dimethylsilan entsprechend einer Ausbeute von 95 % bezogen auf das Silan erhalten.

Der Destillationssumpf war nicht mehr katalytisch aktiv und konnte nicht in einer weiteren Umsetzung verwendet werden, sondern musste zur Rückgewinnung von Iridium direkt aufgearbeitet werden.

### Beispiel 2

In einem 100 ml-Dreihalskolben versehen mit Intensivkühler, Innenthermometer und Tropftrichter wurden 13,8 g (0,18 mol) Allylchlorid, 0,28 g (1 Gew.-% bezogen auf die Gesamtmenge) Lithene® N4-5000 (Fa. Chemetall) und 2,0 mg (3,0·10⁻⁶ mol, 40 ppm w/w Ir bezogen auf die Gesamtmenge) Di-µ-chloro-bis-[(cycloocta-1c,5c-dien)-iridium(I)] vorgelegt. Bei einer Badtemperatur von 40 °C wurden 14,2 g (0,15 mol) Chlorodimethylsilan über einen Zeitraum von 40 min so zudosiert, dass die Innentemperatur 45 °C nicht überstieg. Für die Nachreaktion wurde der Ansatz eine weitere Stunde bei einer Badtemperatur von 45°C gehalten. Nach destillativer Aufarbeitung wurden 24,4 g Chloro-(3-chlorpropyl)-dimethylsilan entsprechend einer Ausbeute von 95,5 % bezogen auf das Silan erhalten. Der Destillationssumpf konnte ohne weitere Aufarbeitung wieder für einen Versuch eingesetzt werden, ohne dass erneut Lithene® N4-5000 oder Iridium-Katalysator zugesetzt werden mussten.

## Patentansprüche

1. Verfahren zur Herstellung von Silanen der allgemeinen Formel I 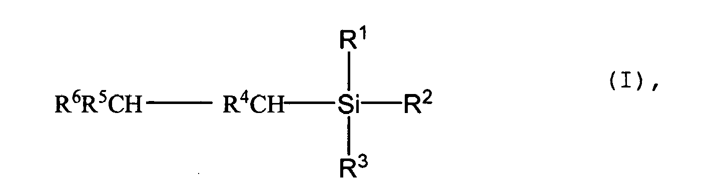 bei dem Verbindungen der allgemeinen Formel II 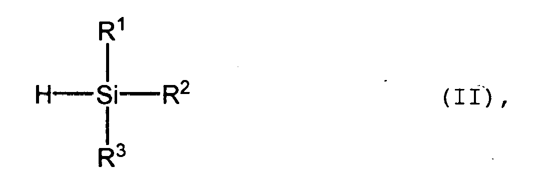 mit Alkenen der allgemeinen Formel III
R⁵R⁶C=CHR⁴ (III),
umgesetzt werden in Gegenwart einer Iridium-Verbindung der allgemeinen Formel IV
[(en)IrCl]₂ (IV),
als Katalysator, in der "en" eine offenkettige, cyclische oder bicyclische Verbindung mit mindestens einer Doppelbindung der allgemeinen Formel V 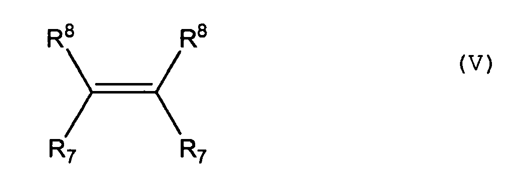 bedeutet, und in Gegenwart von polymeren-Cokatalysatoren, die Struktureinheiten der allgemeinen Formel VI-VIII cis-Doppelbindungen 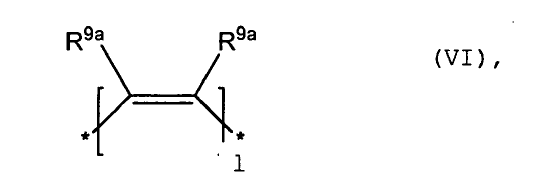 trans-Doppelbindungen 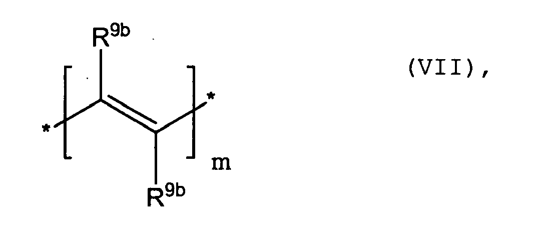 laterale Doppelbindungen 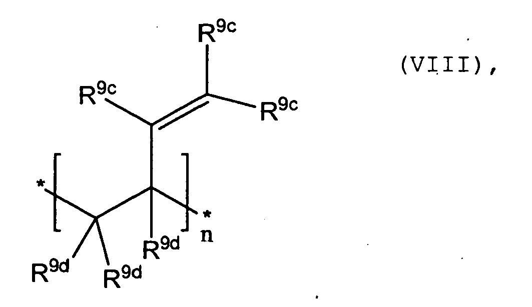 enthalten, wobei
**R¹**, **R², R³** gegebenenfalls mit F, Cl oder Br substituierten Kohlenwasserstoff- oder Alkoxyrest mit jeweils 1 bis 18 C- Atomen, wobei die Kohlenstoffkette durch nicht benachbarte -O- Gruppen unterbrochen sein kann, oder Cl
**R⁴, R⁵, R⁶** Wasserstoff oder gegebenenfalls mit F, Cl, OR, NR'₂, CN oder NCO substituierten Kohlenwasserstoffrest mit jeweils 1 bis 18 C-Atomen, wobei die Kohlenstoffkette durch nicht benachbarte -O- Gruppen unterbrochen sein kann, wobei 2 oder 3 Reste ausgewählt aus **R⁴, R⁵, R⁶** gemeinsam eine cyclische Verbindung sein können,
**R⁷** Wasserstoff oder gegebenenfalls mit F, Cl, OR, NR'₂, CN oder NCO substituierten Kohlenwasserstoffrest mit jeweils 1 bis 18 C-Atomen, wobei die Kohlenstoffkette durch nicht benachbarte -O- Gruppen unterbrochen sein kann, wobei 2 Reste **R⁷** gemeinsam eine cyclische Verbindung sein können,
**R⁸** Wasserstoff oder gegebenenfalls mit F, Cl, OR, NR'₂, CN oder NCO substituierten Kohlenwasserstoffrest mit jeweils 1 bis 1000 C-Atomen, wobei die Kohlenstoffkette durch nicht benachbarte -O- Gruppen unterbrochen sein kann,
**R^{9a}, R^{9b}, R^{9c}, R^{9d}** Wasserstoff oder gegebenenfalls mit F, Cl, OR, NR'₂, CN oder NCO substituierten Kohlenwasserstoffrest mit jeweils 1 bis 18 C-Atomen, wobei die Kohlenstoffkette durch nicht benachbarte -O- Gruppen unterbrochen sein kann, wobei 2 oder 3 Reste ausgewählt aus **R^{9a}, R^{9b}, R^{9c}, R^{9d}** gemeinsam eine cyclische Verbindung sein können,
**R'** Wasserstoff oder gegebenenfalls mit Fl, Cl oder Br substituierten Kohlenwasserstoffrest mit jeweils 1 bis 18 C-Atomen, wobei die Kohlenstoffkette durch nicht benachbarte -O- Gruppen unterbrochen sein kann,
**l, m** ganzzahlige Werte von 3 bis 5000 und
**n** ganzzahlige Werte von 5 bis 5000 bedeuten.

2. Verfahren nach Anspruch 1, bei dem die Kohlenwasserstoffreste **R⁷** ausgewählt werden aus Methyl, Ethyl, Propyl und Phenyl.

3. Verfahren nach Anspruch 1 und 2, bei dem die Kohlenwasserstoffreste **R⁸** mindestens 5 Kohlenstoffatome aufweisen.

4. Verfahren nach Anspruch 1 bis 3, bei dem die Kohlenwasserstoffreste **R^{9a}, R^{9b}, R^{9c}, R^{9d}** 1 bis 10 Kohlenstoffatome aufweisen.

5. Verfahren nach Anspruch 1 bis 4, bei dem **l** und **m** ganzzahlige Werte von 6 bis 2000 aufweisen.

6. Verfahren nach Anspruch 1 bis 5, bei dem **n** ganzzahlige Werte von 10 bis 1000 aufweist.

7. Verfahren nach Anspruch 1 bis 6, bei dem die "en"-Verbindung in der allgemeinen Formel IV zwei Doppelbindungen aufweist.

## Claims

1. Process for preparing silanes of the general formula I 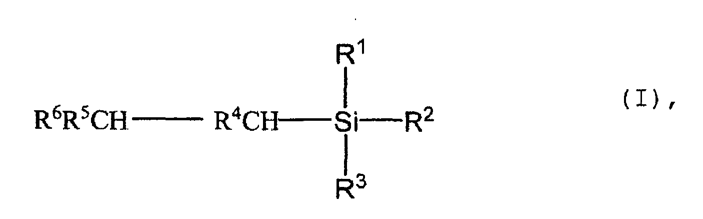 wherein compounds of the general formula II 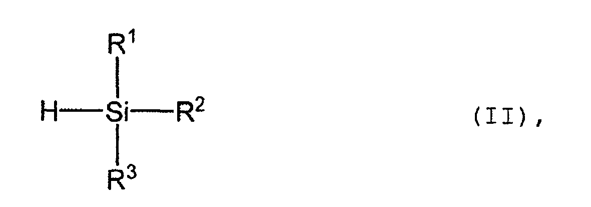 are reacted with alkenes of the general formula III
R⁵R⁶C=CHR⁴ (III),
in the presence of an iridium compound of the general formula IV
[(en)IrCl]₂ (IV),
where "en" is an open-chain, cyclic or bicyclic compound having at least one double bond of the general formula V 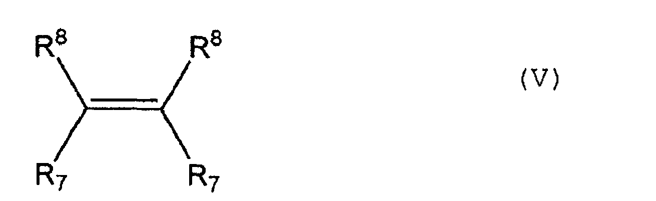 as catalyst and in the presence of polymeric cocatalysts comprising structural units of the general formulae VI-VIII
cis double bonds 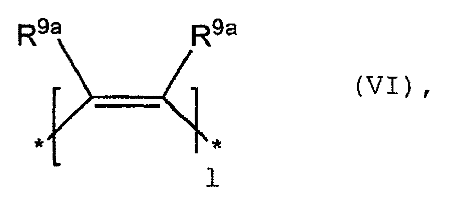 trans double bonds 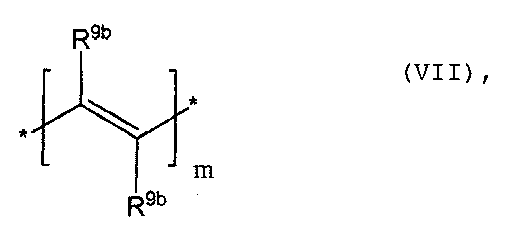 lateral double bonds 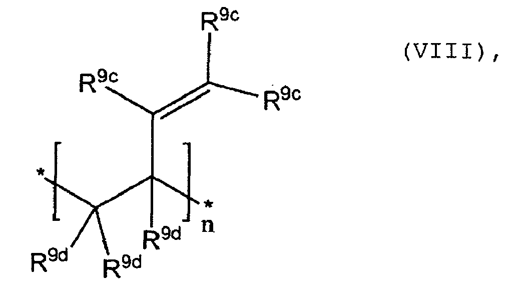 where
**R¹, R², R³** are each a hydrocarbon or alkoxy radical which may be unsubstituted or substituted by F, Cl or Br and has from 1 to 18 carbon atoms, where the carbon chain can be interrupted by nonadjacent -O- groups, or Cl,
**R⁴, R⁵, R⁶** are each hydrogen or a hydrocarbon radical which may be unsubstituted or substituted by F, Cl, OR, NR'₂, CN or NCO and has from 1 to 18 carbon atoms, where the carbon chain can be interrupted by nonadjacent -O- groups, where 2 or 3 radicals selected from among **R⁴, R⁵, R⁶** can together form a cyclic compound,
**R⁷** is hydrogen or a hydrocarbon radical which may be unsubstituted or substituted by F, Cl, OR, NR'₂, CN or NCO and has from 1 to 18 carbon atoms, where the carbon chain can be interrupted by nonadjacent -O- groups, where 2 radicals **R⁷** can together form a cyclic compound,
**R⁸** is hydrogen or a hydrocarbon radical which may be unsubstituted or substituted by F, Cl, OR, NR'₂, CN or NCO and has from 1 to 1000 carbon atoms, where the carbon chain can be interrupted by nonadjacent -O- groups,
**R^{9a}, R^{9b}, R^{9c}, R^{9d}** are each hydrogen or a hydrocarbon radical which may be unsubstituted or substituted by F, Cl, OR, NR'₂, CN or NCO and has from 1 to 18 carbon atoms, where the carbon chain can be interrupted by nonadjacent -O- groups, where 2 or 3 radicals selected from among **R^{9a}, R^{9b}, R^{9c}, R^{9d}** can together form a cyclic compound,
**R'** is hydrogen or a hydrocarbon radical which may be unsubstituted or substituted by F, Cl or Br and has from 1 to 18 carbon atoms, where the carbon chain can be interrupted by nonadjacent -O- groups,
**l, m** are integers from 3 to 5000 and
**n** is an integer from 5 to 5000.

2. Process according to Claim 1, wherein the hydrocarbon radicals **R⁷** are selected from among methyl, ethyl, propyl and phenyl.

3. Process according to Claim 1 or 2, wherein the hydrocarbon radicals **R⁸** have at least 5 carbon atoms.

4. Process according to any of Claims 1 to 3, wherein the hydrocarbon radicals **R^{9a}, R^{9b}, R^{9c}, R^{9d}** have from 1 to 10 carbon atoms.

5. Process according to any of Claims 1 to 4, wherein **l** and **m** are integers from 6 to 2000.

6. Process according to any of Claims 1 to 5, wherein **n** is an integer from 10 to 1000.

7. Process according to any of Claims 1 to 6, wherein the "en" compound in the general formula IV has two double bonds.

## Revendications

1. Procédé pour la préparation de silanes de formule générale I 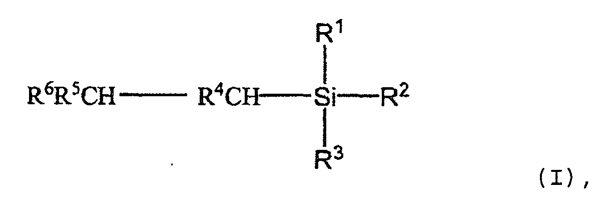 dans laquelle on fait réagir des composés de formule générale II 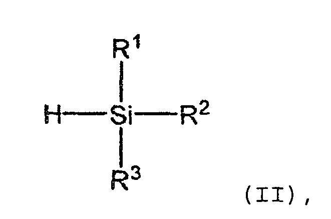 avec des alcènes de formule générale III
R⁵R⁶C=CHR⁴ (III),
en présence d'un composé d'iridium de formule générale IV
[(ène)IrCl]₂ (IV),
en tant que catalyseur, dans laquelle "ène" représente un composé à chaîne ouverte, cyclique ou bicyclique comportant au moins une double liaison, de formule générale V 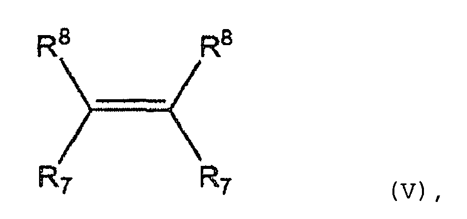 et en présence de co-catalyseurs polymères qui contiennent des motifs structuraux de formules générales VI-VIII
doubles liaisons *cis* 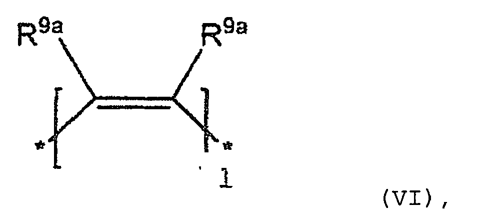 doubles liaisons *trans* 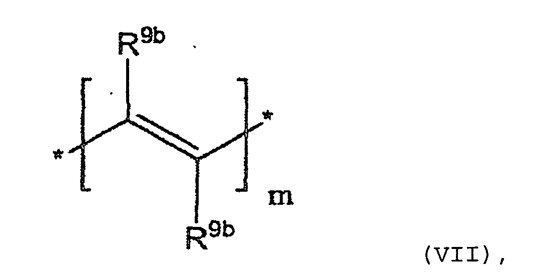 doubles liaisons latérales 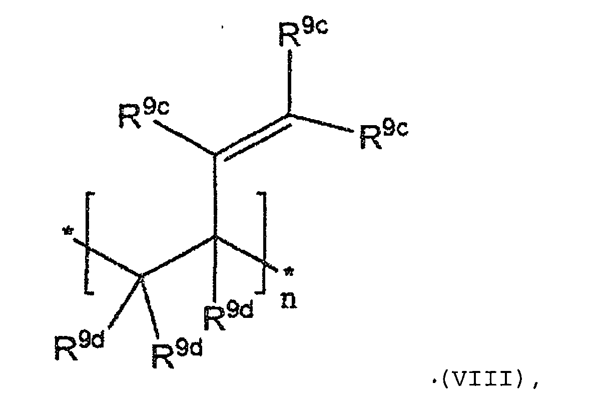 où
**R¹, R², R³** représentent un radical hydrocarboné ou alcoxy ayant chaque fois de 1 à 18 atomes de carbone, éventuellement substitué par F, Cl ou Br, la chaîne carbonée pouvant être interrompue par des groupes -O- non contigus, ou représentent Cl
**R⁴, R⁵, R⁶** représentent un atome d'hydrogène ou un radical hydrocarboné ayant chaque fois de 1 à 18 atomes de carbone, éventuellement substitué par F, Cl, OR, NR'₂, CN ou NCO, la chaîne carbonée pouvant être interrompue par des groupes -O- non contigus, 2 ou 3 radicaux choisis parmi **R⁴, R⁵, R⁶** pouvant former ensemble un composé cyclique,
**R⁷** représente un atome d'hydrogène ou un radical hydrocarboné ayant chaque fois de 1 à 18 atomes de carbone, éventuellement substitué par F, Cl, OR, NR'₂, CN ou NCO, la chaîne carbonée pouvant être interrompue par des groupes -O- non contigus, 2 radicaux **R⁷** pouvant former ensemble un composé cyclique,
**R⁸** représente un atome d'hydrogène ou un radical hydrocarboné ayant chaque fois de 1 à 1 000 atomes de carbone, éventuellement substitué par F, Cl, OR, NR'₂, CN ou NCO, la chaîne carbonée pouvant être interrompue par des groupes -O- non contigus,
**R^{9a}, R^{9b}, R^{9c}, R^{9d}** représentent un atome d'hydrogène ou un radical hydrocarboné ayant chaque fois de 1 à 18 atomes de carbone, éventuellement substitué par F, Cl, OR, NR'₂, CN ou NCO, la chaîne carbonée pouvant être interrompue par des groupes -O- non contigus, 2 ou 3 radicaux choisis parmi **R^{9a}, R^{9b}, R^{9c}, R^{9d}** pouvant former ensemble un composé cyclique,
**R'** représente un atome d'hydrogène ou un radical hydrocarboné ayant chaque fois de 1 à 18 atomes de carbone, éventuellement substitué par F, Cl ou Br, la chaîne carbonée pouvant être interrompue par des groupes -O- non contigus,
**l, m** représentent des nombres entiers valant de 3 à 5 000 et
**n** représente des nombres entiers valant de 5 à 5 000.

2. Procédé selon la revendication 1, dans lequel les radicaux hydrocarbonés **R⁷** sont choisis parmi les groupes méthyle, éthyle, propyle et phényle.

3. Procédé selon les revendications 1 et 2, dans lequel les radicaux hydrocarbonés **R⁸** comportent au moins 5 atomes de carbone.

4. Procédé selon les revendications 1 à 3, dans lequel les radicaux hydrocarbonés **R^{9a}, R^{9b}, R^{9c}, R^{9d}** comportent de 1 à 10 atomes de carbone.

5. Procédé selon les revendications 1 à 4, dans lequel **l** et **m** représentent des nombres entiers valant de 6 à 2 000.

6. Procédé selon les revendications 1 à 5, dans lequel **n** représente des nombres entiers valant de 10 à 1 000.

7. Procédé selon les revendications 1 à 6, dans lequel le composé "ène" dans la formule générale IV comporte deux doubles liaisons.
